# EUROPÄISCHE PATENTSCHRIFT

(11) **EP 1 731 812 B1**
(45) Veröffentlichungstag und Bekanntmachung des Hinweises auf die Patenterteilung: **28.09.2011**
(21) Anmeldenummer: 06114905.0
(22) Anmeldetag: 02.06.2006
(51) Int. Cl.: F16L 3/12, F16L 3/22, H02G 3/30, F16L 3/123

(54) **Kabelbefestigungsklemme zur erleichterten Befestigung, Öffnung und Schließung**
Cable mounting clip for easier mounting, opening and closing
Bride de fixation d'un câble pour la fixation, ouverture et fermeture simplifiée

(30) Priorität: 10.06.2005 IT MI20050214 U
(43) Veröffentlichungstag der Anmeldung: 13.12.2006
(73) Patentinhaber: Fi.Mo.Tec. S.p.A., 20128 Milano (IT)
(72) Erfinder: Feige, Giorgio, 20190, Segrate Milano 2 (MI) (IT)
(74) Vertreter: Jaumann, Paolo

(56) Entgegenhaltungen:
- FR-A- 2 631 417
- US-A- 2 849 777
- US-A- 3 177 542
- US-B1- 6 732 983

## Beschreibung

Die vorliegende Erfindung hat eine Kabelbefestigungsklemme zur erleichterten Befestigung, Öffnung und Schließung zum Gegenstand.

Derzeit sind Kabelbefestigungsklemmen bekannt, die aus Schalen bestehen, die die gleiche Form haben, zu zweit in entgegengesetzter Position gepaart und auf einen metallischen Gewindebolzen gesteckt sind, der mittels auf denselben Bolzen geschraubten Gewindemuttern Halte- und Blockierfunktion hat

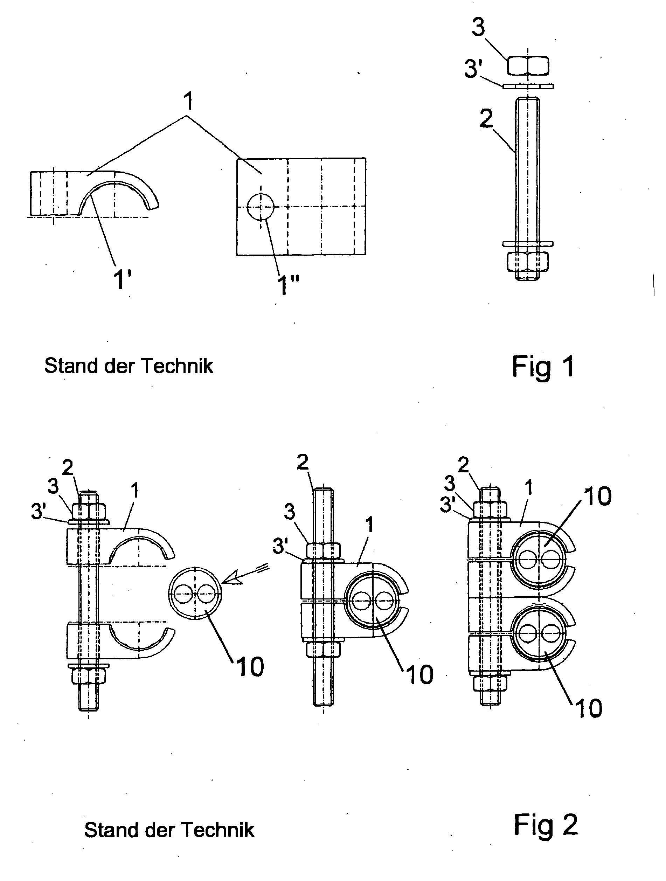

Dieses in den Figuren 1 und 2 dargestellte Einbausystem wird seit längerer Zeit im gewerblichen elektrischen und telefonischen Anlagenbau verwendet.

Die Figur 1 zeigt eine Seitenansicht und eine Draufsicht des Grundelementes oder der Halbschale 1 der bekannten Kabelbefestigungsklemme sowie eine Seitenansicht des Gewindebolzens 2 mit den entsprechenden Sechskantgewindemuttem 3 und den Druckscheiben 3'.

Die Halbschale 1, im Allgemeinen aus thermoplastischem Material hergestellt, ist mit einem Sitz 1', der geeignet ist ein zylindrisches Element 10, wie ein elektrisches Kabel oder ein Rohr, aufzunehmen und zu halten, und einer zylindrischen Durchgangsbohrung 1"ausgestattet, die geeignet ist den metallischen Gewindebolzen 2 aufzunehmen.

Der Bolzen 2 ist dazu bestimmt, zwei oder mehr Halbschalen 1 aufzunehmen, die immer entgegengesetzt gepaart sind.

Die Gewindemuttern 3 mit den zugehörigen Druckscheiben 3' dienen zum Zusammenpressen der Halbschalen 1 selbst und daher zum Blockieren des elektrischen Kabels 10 oder des Rohres 10, die installiert werden.

Die Figur 2 stellt die Verlegung sowohl eines als auch zweier elektrischer Kabel 10 mit der Kabelbefestigungsklemme der bekannten Art dar. Die zwei Halbschalen 1 werden durch Gleiten auf dem Gewindebolzen 2 zum Einführen des elektrischen Kabels 10 voneinander entfernt und anschließend mit den Muttern 3 befestigt.

Derartige Vorrichtungen weisen den Nachteil auf, dass die einmal einzeln auf den Haltebolzen 2 gestapelten Halbschalen 1 leicht während der Einführung der Kabel 10 die Ausrichtung verlieren.

Es stellt sich auch als unbequem und schwierig heraus, die Halbschalen 1 manuell zu dem Zweck, das Kabel 10 seitlich in seinen vorgesehenen Sitz 1' einzuführen, aufzuweiten. Es ist daher seitens des Bedieners ein besonderer Aufwand nötig, um die Halbschalen 1 gleichzeitig voneinander getrennt und ausgerichtet zu halten und sie anschließend manuell sorgfältig über dem Kabel 10 selbst wieder zu schließen, bevor die Gewindemuttern 3 befestigt werden.

Außerdem ist es möglich, wenn die die Kabel 10 einmal in den Sitz 1' eingefährt sind, dass die Kabel 10 während der Phase der Befestigung der Muttern 3 nicht die gewünschte Position beibehalten und deswegen die Befestigung schwierig machen.

Die Aufgabe, die sich die vorliegende Erfindung stellt, ist jene, die oben bei bekannten Arten von Kabelbefestigungsklemmen beklagten Nachteile zu beseitigen, wobei eine Kabelbefestigungsklemme erfunden wird, die seitens des Bedieners mit äußerster Einfachheit gehandhabt werden kann, wodurch also der Einbauvorgang von Kabeln und Rohren erleichtert wird.

US 6 732 983 B1 offenbart eine Kabelbefestigungsklemme nach dem Oberbegriff des Anspruchs 1. Sie weist eine Kabelaufnahme auf, welche auf einen Bolzen montierbar ist. Die Kabelbefestigungsklemme wird mittels Gewindemuttem fixiert. Die Aufnahme umfasst ein oberes Teil und ein unteres Teil, die über eine Schamierverbindung miteinander verbunden sind.

Ein Zweck der vorliegenden Erfindung ist jener, eine Kabelbefestigungsklemme bereitzustellen, deren Halbschalen immer in einer untereinander ausgerichteten Position verbleiben.

Ein weiterer Zweck der vorliegenden Erfindung ist jener, eine Kabelbefestigungsklemme zu erfinden, die in der Lage ist, die Halbschalen in offener oder geschlossener Position in ausreichend stabiler Weise zu halten.

Nicht zuletzt hat diese Erfindung den Zweck, eine Kabelbefestigungsklemme bereitzustellen, die in geschlossener Position in der Lage ist, die Kabel oder Rohre vorzubefestigen.

Diese Aufgabe, die sich im Folgenden besser zeigen, werden von der erfindungsgemäßen Kabelbefestigungsklemme erreicht, die ein auf einen Gewindebolzen montiertes und durch ein Paar Gewindemuttern befestigtes Paar von Halbschalen enthält, wobei die Halbschalen eine Bohrung für die Aufnahme auf dem Bolzen und eine Ausnehmung aufweisen, die passend ist, einen Sitz für die Aufnahme eines zylindrischen Elementes zu bilden, wobei die das Halbschalenpaar bildenden Halbschalen untereinander mittels wenigstens eines Steges aus elastischem Material rückwärtig bezüglich der Einführungsrichtung des zylindrischen Elementes verbunden sind. Erfindungsgemäß werden die Halbschalen untereinander durch einen Kniehebel verbunden, der geeignet ist, die zwischen den zwei besagten Halbschalen erzwungene relative Position aufrechtzuerhalten.

Günstigerweise enthält das Halbschalenpaar eine Halbschale, die eine zylindrische Bohrung aufweist, und eine Halbschale, die ein Langloch aufweist.

Weitere Merkmale und Vorteile der Erfindung ergeben sich in klarerer Form aus der Beschreibung einer bevorzugten aber nicht ausschließlichen Ausführungsform der Kabelbefestigungsklemme, die in den beigefügten Zeichnungen in indikativer und nicht beschränkender Weise dargestellt ist, wobei:
die Figur 3 eine Seitenansicht und eine Draufsicht bekannten Kabelbefestigungsklemme zeigt;
die Figur 4 eine schematische Darstellung der Befestigung der Kabelbefestigungsklemme am Haltebolzen ist;
nach Figur 3
die Figur 5 eine Draufsicht und eine Seitenansicht einer erfindungsgemäßen Kabelbefestigungsklemme und der zugehörigen Befestigung am Haltebolzen darstellt;
die Figur 6 eine schematische Darstellung der Befestigung einer oder mehrerer erfindungsgemäßer Kabelbefestigungsklemmen am Haltebolzen ist.

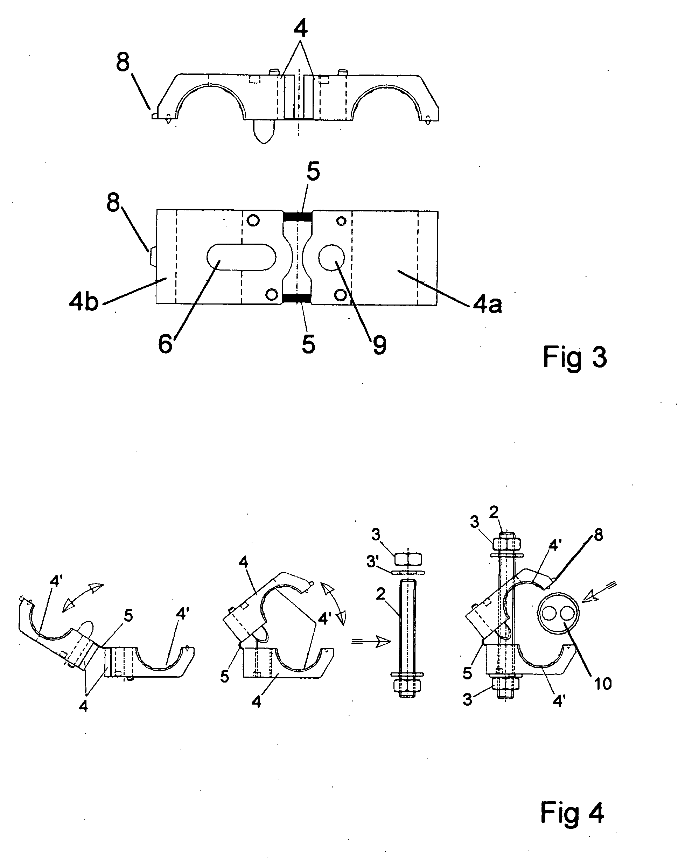

Wie in Figur 3 schematisch dargestellt, weist die Kabelbefestigungsklemme eine zweischalige Struktur auf, die ein Paar Halbschalen 4 enthält, die geeignet sind ein zylindrisches Element 10 aufzunehmen und rückwärtig bezüglich der Einführungsrichtung der zylindrischen Elemente 10 untereinander aufklappbar sind.

Die Halbschalen 4 sind derart gestaltet, dass sie einen Sitz 4' bilden, der geeignet ist, das zylindrische Element 10 aufzunehmen und zu halten, und sind mit einer Durchgangsbohrung 6, 9 ausgestattet, die geeignet ist, den metallischen Gewindebolzen 2 aufzunehmen.

Derartige Halbschalen entstehen während der Produktion bereits gepaart und unverlierbar, da sie über einen oder zwei Stege 5 verbunden ausgeführt sind, die gleichzeitig während der Produktion der Halbschalen 4 selbst durch Spritzguss gepresst werden.

Die Stege 5, die neben dem Zusammenhalten des Paares der Halbschalen 4 dazu bestimmt sind, das Basispaar der Kabelbefestigungsklemme zu bilden, bestehen aus flexiblem elastischem Material, damit sie auch die Funktion eines Scharniers ausüben.

Wie dargestellt, entsteht das Paar der Halbschalen 4 während des Gießvorganges in einer Ebene ausgerichtet. Durch die elastischen Eigenschaften des Materials, in dem sowohl die Halbschalen 4 als auch die Stege 5 ausgeführt sind, ist es möglich, eine der zwei Halbschalen 4 anschließend um 180° zu drehen, bis sie aufeinander passen und den kreisförmigen Sitz 4' bilden, der das einzubauende zylindrische Element 10 festhalten wird.

Figur 4 zeigt diesen Kippvorgang. Das Paar der so geklappten Halbschalen 4 wird seinerseits auf den Gewindebolzen 2 aufgesteckt und daraufhin von einer oder mehr Muttern 3, die auf dem Bolzen 2 selbst montiert sind, blockiert, wenn das einzubauende Kabel 10 oder das einzubauende Rohr 10 einmal im Sitz 4' eingerichtet worden sind.

Damit die Kabelbefestigungsklemme auch dann zu öffnen und zu schließen ist, wenn die Halbschalen 4 auf den Gewindehaltebolzen 2 aufgesteckt sind, weist eine Halbschale 4b des Paares der Halbschalen 4 ein Langloch 6 auf, das als Langschlitz gestaltet ist.

Diese Besonderheit gestattet die freie Drehbewegung um einen variablen Winkel einer Halbschale 4b gegen die andere 4a, während die Halbschale 4a in ihrer Position auf dem Haltebolzen 2 ausgerichtet bleibt, da sie von ihrer zylindrischen Bohrung 9 geführt wird.

Die besondere Anordnung der Stege 5, die als Scharnier dienen, und des Langlochs 6 der Halbschale 4b bezüglich des Haltebolzens 2 gestattet eine "mundartige" Öffnung des Paares der Halbschalen 4 und daher die einfache Einführung des zylindrischen Elements 10.

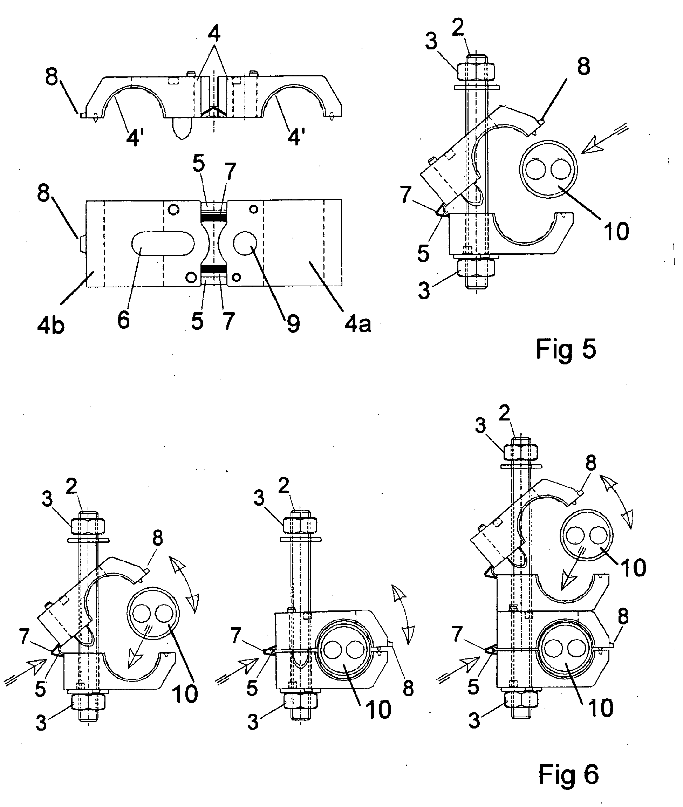

Wie in Figur 5 gezeigt, sieht die erfindungsgemäße Kabelbefestigungsklemme die Hinzufügung eines zweiten Steges 7, der die Form eines "Kniehebels" hat, zwischen dem Paar der Halbschalen 4 vor.

Dieser Kniehebel 7 garantiert eine kontrollierte und halbautomatische Öffnung und Schließung des Paares der Halbschalen 4 und kann auch gleichzeitig während des thermoplastischen Spritzgusses der zweischaligen Hülle erhalten werden.

Der Kniehebel 7 ist im Vergleich zu den Stegen 5 durch eine andere Krümmung und Geometrie gekennzeichnet. Die Abmessungen und die Form des Kniehebels 7 sind derart, dass sie gestatten, dass dieser in der Lage ist, eine Hebelwirkung auszuüben, die geeignet ist, die relative Position zwischen den zwei Halbschalen 4a, 4b aufrechtzuerhalten, wobei die zweischalige Hülle geschlossen gehalten wird oder alternativ einrastend offen, gemäß der der beweglichen Halbschale 4b von Hand gegebenen Winkelung.

Dieses Prinzip zur halbautomatischen und kontrollierten Öffnung und Schließung bietet den Vorteil, dass die zweischalige Hülle stabil offen oder geschlossen gehalten wird, wobei dem Installateur der Vorteil geboten wird, den Sitz 4' zur Aufnahme der elektrischen Kabel 10 ohne die Hilfe eines Eingriffes von Hand stabil "mundartig" aufgeweitet zu halten, wodurch die Einführung der Kabel 10 selbst erleichtert wird.

Sobald die zweischalige Hülle um das Kabel 10 wieder geschlossen ist, resultiert die Wirkung des Kniehebels 7 in einer leichten Vorbefestigung des Kabels 10 selbst, wodurch der Befestigungsvorgang durch das Anziehen der Muttern 3 erleichtert wird.

Schließlich ist der äußere Endteil der beweglichen Halbschale 4b bzw. der Halbschale mit der langgeschlitzten Bohrung 6 zur Erleichterung der manuellen Öffnung der zweischaligen Hülle mit einer vorstehenden Zunge 8 versehen, die das Fassen von Hand während der Arbeit erleichtert.

In der Praxis hat sich bestätigt, wie die erfindungsgemäße Kabelbefestigungsklemme die Aufgabe und auch die vorgegebenen Zwecke voll erfüllt, da die zweischalige Struktur die Notwendigkeit einer Ausrichtung der zwei Halbschalen, die sich als schwierig herausstellt, vermeidet und so den Einbauvorgang von Kabeln und Rohren erleichtert.

Ferner ist festgestellt worden, wie die so beschriebene erfindungsgemäße Kabelbefestigungsklemme es gestattet, die Halbschalen in ausreichend fester Weise in offener oder geschlossener Position zu halten.

Nicht zuletzt ist festgestellt worden, wie die erfindungsgemäße Kabelbefestigungsklemme in geschlossener Position in der Lage ist, eine Vorbefestigung der Kabel und Rohre vorzunehmen.

Die so konzipierte Erfindung ist empfänglich für zahlreiche Veränderungen und Varianten, die alle in den Rahmen des Erfindungsbegriffes passen. So können zum Beispiel die eingesetzten Materialien und auch die Abmessungen gemäß den Anforderungen andere sein.

## Patentansprüche

1. Kabelbefestigungsklemme enthaltend ein auf einem Gewindebolzen (2) montiertes und durch ein Paar Gewindemuttern (3) befestigtes Paar von Halbschalen (4), wobei besagte Halbschalen (4a, 4b) eine Bohrung (6, 9) zur Aufnahme des Gewindebolzens (2) und eine Ausnehmung, die geeignet ist, einen Sitz (4') zur Aufnahme eines zylindrischen Elementes (10) zu bilden, aufweisen, wobei die das besagte Paar von Halbschalen (4) bildende Halbschalen (4a, 4b) untereinander rückwärtig bezüglich der Einführungsrichtung des besagten zylindrischen Elementes (10) mittels wenigstens eines Steges (5) aus elastischem Material verbunden sind, **dadurch gekennzeichnet, dass** die besagten Halbschalen (4a, 4b) untereinander durch einen Kniehebel (7) verbunden sind, der geeignet ist, eine relative, zwischen den besagten zwei Halbschalen (4a, 4b) erzwungene Position aufrechtzuerhalten.

2. Kabelbefestigungsklemme nach Anspruch 1, **dadurch gekennzeichnet, dass** das besagte Paar von Halbschalen (4) eine eine zylindrische Bohrung (9) aufweisende Halbschale (4a) und eine ein Langloch (6) aufweisende Halbschale (4b) enthält.

3. Kabelbefestigungsklemme nach einem beliebigen der vorhergehenden Ansprüche, **dadurch gekennzeichnet, dass** besagte relative zwischen den besagten zwei Halbschalen (4a, 4b) erzwungene Position derart ist, dass besagte Halbschalen (4a, 4b) "mundartig" gemäß einer Winkelung von weniger als 90° geöffnet gehalten werden.

4. Kabelbefestigungsklemme nach einem beliebigen der vorgehenden Ansprüche, **dadurch gekennzeichnet, dass** die besagte relative zwischen den besagten zwei Halbschalen (4a, 4b) erzwungene Position derart ist, dass die besagten Halbschalen (4a, 4b) geschlossen gehalten werden.

5. Kabelbefestigungsklemme nach einem beliebigen der vorhergehenden Ansprüche, **dadurch gekennzeichnet, dass** die besagte ein Langloch (6) enthaltende Halbschale (4b) mit einer vorstehenden Zunge (8) versehen ist.

## Claims

1. Cable clamp comprising a pair of half-shells(4) mounted on a threaded pin(2) and fixed by means of a pair of threaded nuts (3), whereby the said semi-shells(4a, 4b) feature a hole (6,9) to house the threaded pin (2) and a recess(4') to house a cylindrical element(10), in which the half-shells (4a, 4b) which make up the said pair of half-shells (4) are joined to each other at the back compared to the direction of insertion of the said cylindrical element (10) by means of at least one connector (5) made of elastic material, **characterised by** the fact that the said semi-shells (4a, 4b) are joined together by an articulated lever (7) to hold a forced and relative position between the said semi-shells (4a, 4b).

2. Cable clamp according to claim 1, **characterised by** the fact that the said pair of semi-shells(4) comprises a semi-shell (4a) that features a cylindrical hole(9) and a semi-shell (4b) that features an elongated hole (6).

3. Cable clamp according to any one of the above claims, **characterised by** the fact that the said relative and forced position between the said semi-shells(4a, 4b) is such that the said semi-shells (4a, 4b)are held open like a "mouth" at an angle of less than 90°.

4. Cable clamp according to any one of the above claims, **characterised by** the fact that the said relative and forced position between the said semi-shells (4a, 4b) is such that the said semi-shells (4a, 4b) are kept closed.

5. Cable clamp according to any one of the above claims, **characterised by** the fact that the said semi-shell (4b), which comprises an elongated hole (6), features a protruding tab (8).

## Revendications

1. Etau de fixation de câble comprenant une paire de demi-coques (4) montées sur un axe fileté (2) et fixées au moyen d'une paire d'écrous filetés (3), dans lesquels lesdites demi-coques (4a, 4b)présentent un trou (6,9) pour le logement de l'axe fileté (2) et une échancrure destinée à former un logement (4') pour y loger un élément cylindrique (10), où les demi-coques (4a, 4b) formant ladite paire de demi-coques (4) sont unies l'une à l'autre par l'arrière par rapport au sens d'introduction dudit élément cylindrique (10) au moyen d'au moins un pontet (5) en matière élastique, **caractérisé par le fait que** lesdites demi-coques (4a, 4b) sont unies l'une à l'autre au moyen d'un levier articulé (7) destiné à maintenir une position relative et forcée entre lesdites demi-coques (4a, 4b).

2. Etau de fixation de câble selon la revendication 1, **caractérisé par le fait que** ladite paire de demi-coques (4) comprend une demi-coque (4a) présentant un trou cylindrique (9) et une demi-coque (4b) présentant un trou allongé (6).

3. Etau de fixation de câble selon une des revendications précédentes, **caractérisé par le fait que** ladite position relative et forcée entre lesdites demi-coques (4a, 4b) fait en sorte que lesdites demi-coques (4a, 4b) soient maintenues ouvertes en guise de "bouche" avec une orientation inférieure à 90°.

4. Etau de fixation de câble selon une des revendications précédentes, **caractérisé par le fait que** ladite position relative et forcée entre lesdites demi-coques (4a, 4b) fait en sorte que lesdites demi-coques (4a, 4b) soient maintenues fermées.

5. Etau de fixation de câble selon une revendication précédente quelconque, **caractérisé par le fait que** ladite demi-coque (4b) comprenant un trou allongé (6) est munie d'une languette saillante (8).
